# EUROPÄISCHE PATENTSCHRIFT

(11) **EP 0 894 653 B1**
(45) Veröffentlichungstag und Bekanntmachung des Hinweises auf die Patenterteilung: **18.02.2004**
(21) Anmeldenummer: 98110670.1
(22) Anmeldetag: 10.06.1998
(51) Int. Cl.: B60J 3/02

(54) **Sonnenblende für Fahrzeuge**
Sun visor for vehicles
Pare-soleil pour véhicules

(30) Priorität: 26.07.1997 DE 19732257
(43) Veröffentlichungstag der Anmeldung: 03.02.1999
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)
(74) Vertreter: Hemmelmann, Klaus

(56) Entgegenhaltungen:
- EP-A- 0 401 760
- EP-A- 0 496 964
- DE-A- 1 430 197
- DE-A- 19 635 683
- DE-A- 19 635 684
- JP-A- 8 268 057
- JP-A- 59 020 725
- US-A- 4 773 699
- US-A- 5 601 766

## Beschreibung

Die Erfindung bezieht sich auf eine Sonnenblende für Fahrzeuge mit einem hohlen blasgeformten Sonnenblendenkörper, der eine erste, eine im wesentlichen ebene Breitseite des Sonnenblendenkörpers bildende Wandung und eine zweite, eine Breitseite des Sonnenblendenkörpers mit einer wannenförmigen Vertiefung bildende Wandung aufweist, wobei die Vertiefung einen Spiegel mit einem diesen halternden Einfaßrahmen aufnimmt.

Ähnliche Sonnenblenden der gattungsgemäßen Art sind z. B. aus EP 0 401 760 A1 bekannt. Die Herstellung der bekannten Sonnenblende, die aus vielen Einzelteilen zusammengebaut ist, ist recht aufwendig und kostspielig, was insbesondere auch für die Anordnung eines Spiegels am Sonnenblendenkörper gilt.

Die Herstellung einer gattungsgemäßen Sonnenblende ist aus JP 0 8268057 bekannt. Der vorliegenden Erfindung liegt die Aufgabe zugrunde, eine Sonnenblende der eingangs genannten Art zu schaffen, die relativ einfach herzustellen ist, aus nur wenigen Teilen besteht, besonders formstabil ist und zudem ein gutes Aussehen besitzt.

Zur Lösung dieser Aufgabe sind erfindungsgemäß die im Anspruch 1 angegebenen Merkmale vorgesehen.

Die erfindungsgemäße Sonnenblende ist einfach herzustellen, weil eine nachträgliche Befestigungsanordnung des Spiegels nebst Einfaßrahmen nicht mehr erforderlich ist. Vielmehr wird nunmehr der Sonnenblendenkörper bereichsweise um den Einfaßrahmen herumgeformt. Dadurch wird nicht nur die Herstellung vereinfacht sondern auch die Stabilität des Sonnenblendenkörpers wie auch das gute Aussehen erhöht.

Die Weiterbildung der Erfindung nach Anspruch 2 ermöglicht es, dem Blasformwerkzeug eine vormontierte, aus Spiegel und Spiegelrahmen bestehende Einheit zuzuführen und den Sonnenblendenkörper gegen diese Einheit formzublasen, die dem Sonnenblendenkörper eine besonders hohe Festigkeit und Steifheit verleiht, zumal sich eine Abstützung der einen Breitseite auf der anderen Breitseite des Sonnenblendenkörpers ergibt.

Anspruch 3 sieht die Anordnung bzw. Ausbildung von Stabilisierungssicken vor, die zudem offen und damit buchsenförmig gestaltet und damit besonders gut für die kraftschlüssige Halterung von Steckzapfen eines Anbauelements geeignet sind.

Die Maßnahme nach Anspruch 4 ermöglicht es, den Sonnenblendenkörper der Weiterverwertung zuzuführen, weil PP besonders gut zu recyceln ist.

Die Ausgestaltung der Erfindung nach Anspruch 5 bietet den Vorteil auf eine sonst übliche Umhüllung des Sonnenblendenkörpers mit Dekormaterial verzichten zu können.

Weitere sinnvolle Ausgestaltungen und vorteilhafte Weiterbildungen der Erfindung sind in den Ansprüchen 6 bis 9 angegeben.

Ein Ausführungsbeispiel der Erfindung wird im folgenden anhand der Zeichnungen näher erläutert, und es zeigen:

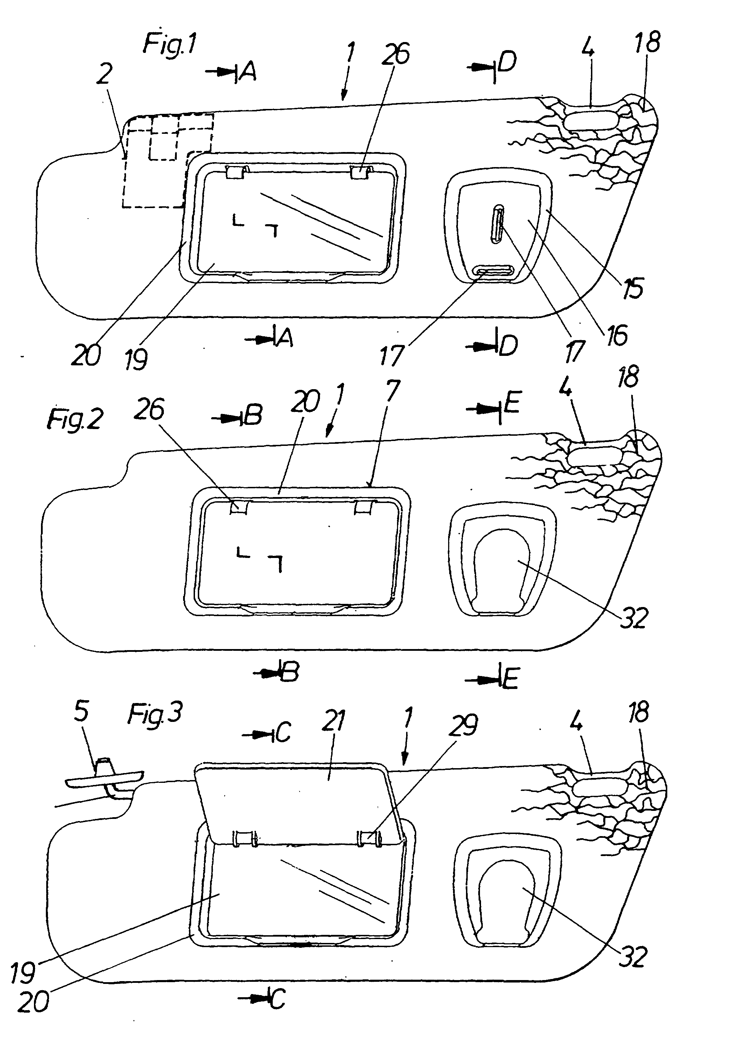

- Fig. 1: einen Sonnenblendenkörper mit Spiegel und Einfaßrahmen,
- Fig. 2: den Sonnenblendenkörper mit Klappdeckel und Tiketklammer ergänzt,
- Fig. 3: den Sonnenblendenkörper mit Klappdeckel in Offenstellung,

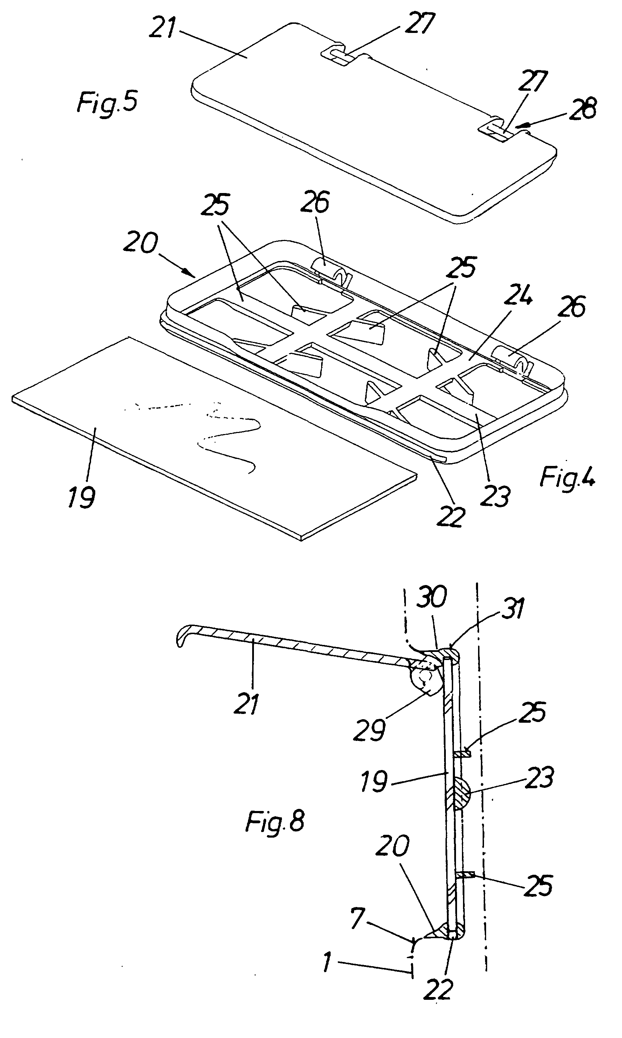

- Fig. 4: eine schaubildliche Ansicht von Spiegel und Einfaßrahmen,
- Fig. 5: eine schaubildliche Ansicht des Klappdeckels,
- Fig. 6: einen Schnitt A - A nach Fig. 1,
- Fig. 7: einen Schnitt B - B nach Fig. 2,

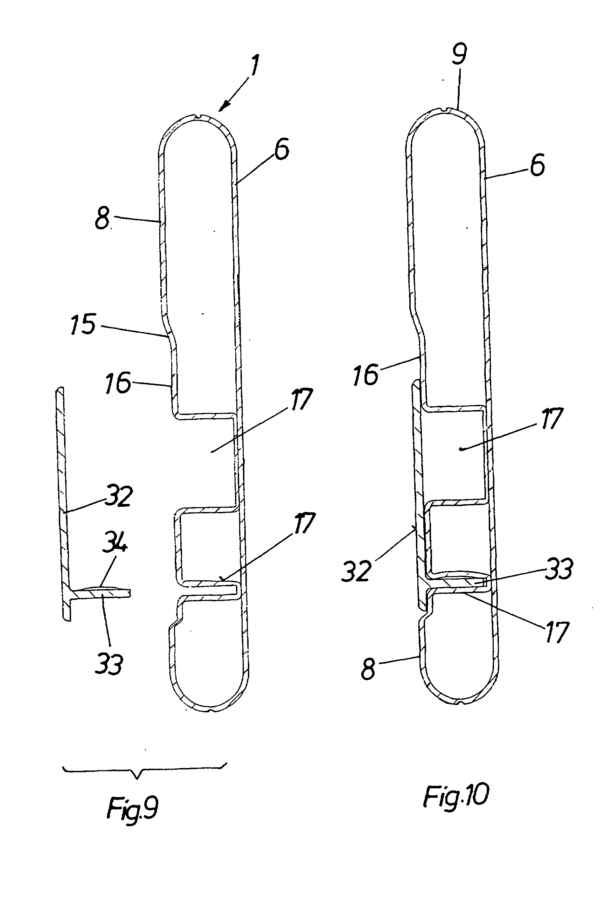

- Fig. 8: einen Schnitt C - C nach Fig. 3,
- Fig. 9: einen Schnitt D - D nach Fig. 1 und
- Fig.10: einen Schnitt E - E nach Fig. 2.

Die neue Sonnenblende weist einen hohlen blasgeformten Sonnenblendenkörper 1 auf, in dem einendig ein Lagerkörper 2 für die Lagerung einer Sonnenblendenachse 3 angeordnet ist, vorzugsweise nach der Lehre der älteren Patentanmeldung Nr. 196 35 683.0. Am anderen Endbereich ist der Sonnenblendenkörper 1 mit einem Gegenlagerstift 4 einstückig und materialeinheitlich ausgebildet. Zur Anordnung der Sonnenblende an einer Fahrzeugkarosserie dient ein einendig mit der Sonnenblendenachse verbundenes Drehlagergehäuse 5 und ein nicht gezeigtes Gegenlagergehäuse, in das der Gegenstift 4 einrastbar ist.

Der Sonnenblendenkörper 1 weist eine erste, eine im wesentlichen ebene Breitseite des Sonnenblendenkörpers 1 bildende Wandung 6 und eine zweite, eine Breitseite des Sonnenblendenkörpers 1 mit einer wannenförmigen Vertiefung 7 bildende Wandung 8 auf. Die Wandungen 6 und 8 gehen über eine umlaufende Wandungsabrundung 9 ineinander über. Die wannenförmige Vertiefung 7 weist einen Boden 10 und Wände 11 auf, die die Wandung 8 mit dem Boden 10 verbinden. Die Wände 11 sind mit einer umlaufenden Rinne 12 ausgebildet. Vom Boden 10 der wannenförmigen Vertiefung 7, die etwa rechteckig ist und abgerundete Ecken aufweist, gehen sich auf der Innenfläche der Wandung 6 des Sonnenblendenkörpers 1 abstützende Sicken 13 aus, wie auch weitere Sicken 14 geringerer Tiefe.

Der Sonnenblendenkörper 1 weist etwas von der wannenförmigen Vertiefung 7 beabstandet eine Ausbuchtung 15 mit einem Boden 16 auf, von dem zwei weitere, senkrecht zueinander ausgerichtete Sicken 17 ausgehen, die sich auf der Innenfläche der gegenüberliegenden Wandung 6 des Sonnenblendenkörpers 1 abstützen.

Der Sonnenblendenkörper 1 ist ein vorzugsweise aus PP-Material gebildeter Blasformkörper mit einer eine Narbung 18 aufweisenden Oberflächenstruktur.

In der wannenförmigen Vertiefung 7 ist eine Einbaueinheit angeordnet, die zumindest einen Spiegel 19 und einen diesen halternden Einfaßrahmen 20, vorzugsweise aber auch einen Klappdeckel 21 umfaßt. Bei dem Spiegel 19 kann es sich um einen Glasspiegel handeln, der rückseitig eine nicht gezeigte Splitterschutzeinrichtung herkömmlicher Art trägt.

Der den Spiegel 19 halternde Einfaßrahmen 20 ist nach Art einer Kassette mit einer Nutaufnahme 22 ausgebildet, die längs eines Rahmenschenkels zum Einschieben des Spiegels 19 offen ist. Der Einfaßrahmen 20 weist als Boden eine Längsrippe 23 und zwei die Längsrippe 23 kreuzende Querrippen 24 auf. Der Spiegel 19 stützt sich auf der Längsrippe 23 und den Querrippen 24 ab. An den Querrippen 24 des vorzugsweise als Kunststoff-Spritzgußteil ausgebildeten Einfaßrahmens 20 sind vom Spiegel 19 wegweisende, vertikal ausgerichtete Rippen 25 in schräger Ausrichtung angeformt.

Der Einfaßrahmen 20 weist weiterhin an einem seiner Längsschenkel angeformte Scharnierhaken 26 auf, die zum Einhängen von Lagerstiften 27 dienen, die am Klappdeckel 21, randoffene Ausnehmungen 28 überbrückend, angeformt sind. Der Klappdeckel 21 ist mit daran angeformten Segmentkörpern 29 ausgestattet, die auf dem Spiegel 19 abgleiten und dazu dienen, den Klappdeckel 21 einmal in der den Spiegel 19 freigebenden Position und einmal in der den Spiegel abdeckenden Position zu halten.

Der Einfaßrahmen 20 ist umlaufend mit einem von einer stufenförmigen Absetzung 30 ausgehenden Wulst 31 ausgebildet, der in der Rinne 12 des Sonnenblendenkörpers 1 eine formschlüssige Aufnahme findet.

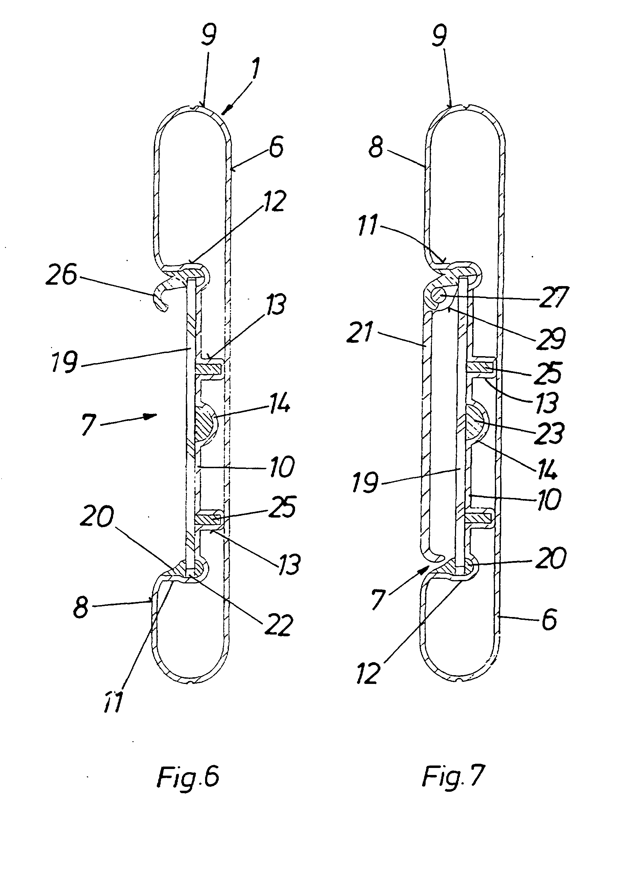

Der Spiegel 19 und der Einfaßrahmen 20 werden zusammengesetzt und mit dem Sonnenblendenkörper 1 verbunden. Für die Herstellung der Verbindung werden aber nun nicht die herkömmlichen Klebe-, Schweiß-, Schraub- oder Verankerungstechniken eingesetzt sondern eine Verbindung durch Umformen unmittelbar bei der Herstellung des Sonnenblendenkörpers 1. Bei dieser Herstellung kommt ein zweiteiliges Formwerkzeug zum Einsatz, dessen Formhälften auseinandergefahren sind um den Abschnitt eines extrudierten Folienschlauchs aus thermoplastischem Material, vorzugsweise PP aufnehmen zu können. Während oder bevor der Folienschlauch in die offene Blasform eingebracht wird, wird die aus Spiegel 19 und Einfaßrahmen 20 gebildete Einheit an der Innenfläche einer Formhälfte an einer exakt vorgegebenen Stelle positioniert und durch Haltemittel gehalten, so daß die genannte Einheit Teil der Formkavität wird, gegen deren Wandungen der Folienschlauch durch Einblasen von Luft blasgeformt wird. Der Folienschlauch ist beim Blasformen bis kurz vor dem Materialschmelzpunkt erwärmt und damit in der Lage, den Wulst 31 ebenso abzuformen wie die Sicken 13 und 14 wie dies die Fig. 6 und 7 besonders deutlich zeigen. Nach dem Abkühlen und Verfestigen des Folienschlauchmaterials erhält man einen Sonnenblendenkörper 1 der innig, formschlüssig und unlösbar mit dem den Spiegel 19 tragenden Einfaßrahmen 20 verbunden ist.

In einem nachgeschalteten Arbeitsschritt wird der Klappdeckel 21 in die Scharnierhaken 26 eingehängt, obgleich es denkbar ist, diesen Schritt schon vor der Verbindung des Einfaßrahmens 20 mit dem Sonnenblendenkörper 1 durchzuführen.

In einem nachgeschalteten Arbeitsschritt kann auch ein Anbauelement in Form einer Ticketklammer 32 oder dgl. am Sonnenblendenkörper 1 angebracht werden, die im Bereich der Ausbuchtung 15 zur Anordnung kommt und über Zapfen 33 befestigt wird, die kraftschlüssig in den Sicken 17 gehalten sind. Durch eine federnde Überhöhung 34 der Zapfen 33 läßt sich die Befestigungsqualität noch erhöhen.

Der Klappdeckel und die Ticketklammer sind jeweils als Kunststoff-Spritzgußteil ausgebildet.

## Patentansprüche

1. Sonnenblende für Fahrzeuge mit einem hohlen, blasgeformten Sonnenblendenkörper (1), der eine erste, eine im wesentlichen ebene Breitseite des Sonnenblendenkörpers (1) bildende Wandung (6) und eine zweite, eine Breitseite des Sonnenblendenkörpers (1) mit einer wannenförmigen Vertiefung (7) bildende Wandung (8) aufweist, wobei die Vertiefung (7) einen Spiegel (19) aufnimmt, **dadurch gekennzeichnet, daß** der Spiegel (19) von einem Einfaßrahmen (20) gehalten wird und die Vertiefung (7) einen von Rippen (23, 24) gebildeten Boden (10) und den Einfaßrahmen (20) peripherisch umgebende Wände (11) aufweist, die beim Blasformen des Sonnenblendenkörpers (1) um einen Außenwulst (31) des Einfaßrahmens (20) herum unter Bildung einer den Außenwulst (31) formschlüssig aufnehmenden Rinne (12) geformt sind, wobei am Boden des Einfaßrahmens (20) vom Spiegel wegweisende Rippen (25) angeordnet sind, um die herum beim Blasformen des Sonnenblendenkörpers (1) das den Boden (10) der Vertiefung (7) bildende Material geformt ist und die sich unter Zwischenlage des genannten Materials auf der Innenfläche der im wesentlichen ebenen Breitseite (6) des Sonnenblendenkörpers (1) abstützen.

2. Sonnenblende nach Anspruch 1, **dadurch gekennzeichnet, daß** der Einfaßrahmen (20) die Rahmenöffnung durchquerende, horizontal ausgerichtete Rippen (23, 24) zum rückseitigen Abstützen des Spiegels (19) aufweist und die vom Spiegel (19) wegweisenden, vertikal ausgerichteten Rippen (25) an den horizontal ausgerichteten Rippen (24) angeordnet sind.

3. Sonnenblende nach Anspruch 1 oder 2, **dadurch gekennzeichnet, daß** der Einfaßrahmen (20) eine die Spiegelränder umgreifende, zumindest längs eines Schenkels offene Aufnahmenut (22) aufweist.

4. Sonnenblende nach einem der Ansprüche 1 bis 3, **dadurch gekennzeichnet, daß** der Sonnenblendenkörper (1) mit Sicken (17) ausgebildet ist, die sich von der Außenseite einer seiner Breitseite oder vom Boden (16) einer Ausbuchtung (15) in dieser Breitseite bis in Anlage an der Innenfläche der gegenüberliegenden Breitseite erstrecken und daß die Sicken (17) sowohl zur Stabilisierung des Sonnenblendenkörpers (1) als auch zur Aufnahme von Steckzapfen (33) zumindest eines Anschlußelements, wie eine Tiketklammer (32) vorgesehen sind.

5. Sonnenblende nach wenigstens einem der Ansprüche 1 bis 4, **dadurch gekennzeichnet, daß** der Sonnenblendenkörper (1) aus Polypropylen Material besteht.

6. Sonnenblende nach wenigstens einem der Ansprüche 1 bis 5, **dadurch gekennzeichnet, daß** der Sonnenblendenkörper (1) eine Oberflächennarbung (18), wie Ledernarbung aufweist.

7. Sonnenblende nach wenigstens einem der Ansprüche 1 bis 6, **dadurch gekennzeichnet, daß** an dem Einfaßrahmen (20) ein den Spiegel (19) bei Nichtgebrauch abdeckender Klappdeckel (21) angelenkt ist.

8. Sonnenblende nach wenigstens einem der Ansprüche 1 bis 7, **dadurch gekennzeichnet, daß** der Klappdeckel (21) an einem Längsrand durch randoffene, von je einem Lagerstift (27) durchquerte Ausnehmungen (28) unterbrochen ist, daß die Lagerstifte (27) mit am Einfaßrahmen (20) vorgesehene Scharnierhaken (26) zusammenwirken und daß der Klappdeckel (21) mit auf dem Spiegel (19) abgleitenden Segmentkörpern (29) ausgestattet ist, die den Klappdeckel (21) in der geöffneten und in der geschlossenen Lage halten.

9. Sonnenblende nach wenigstens einem der Ansprüche 1 bis 8, **dadurch gekennzeichnet, daß** der Sonnenblendenkörper (1), der Einfaßrahmen (20), Klappdeckel (21) und ggf. die Ticketklammer (32) farblich auf die Fahrzeuginnenausstattung abgestimmt ist.

10. Sonnenblende nach wenigstens einem der Ansprüche 1 bis 9, **dadurch gekennzeichnet, daß** der Einfaßrahmen (20), der Klappdeckel (21) sowie die Ticketklammer (32) jeweils als Kunststoff-Spritzgußteil ausgebildet ist.

## Claims

1. Sun visor for vehicles having a hollow, blow-moulded sun visor body (1) which has a first wall (6) forming an essentially flat wide side of the sun visor body (1) , and a second wall (8) forming a wide side of the sun visor body (1) with a trough-shaped depression (7), the depression (7) accommodating a mirror (19), **characterized in that** the mirror (19) is held by a mounting frame (20), and the depression (7) has a base (10) which is formed by ribs (23, 24), and walls (11) which peripherally surround the mounting frame (20) and, during the blow-moulding of the sun visor body (1), are moulded around an external bead (31) of the mounting frame (20) forming a channel (12) which holds the external bead (31) in a form-fitting manner, with ribs (25) which point away from the mirror being arranged on the base of the mounting frame (20), around which ribs the material forming the base (10) of the depression (7) is moulded during the blow-moulding of the sun visor body (1) and which are supported, with the material mentioned positioned in between, on the inner surface of the essentially flat wide side (6) of the gun visor body (1).

2. Sun visor according to Claim 1, **characterized in that** the mounting frame (20) has horizontally aligned ribs (23, 24) which traverse the frame opening, for supporting the mirror (19) on the rear side, and the vertically aligned ribs (25) which point away from the mirror (19) are arranged on the horizontally aligned ribs (24).

3. Sun visor according to Claim 1 or 2, **characterized in that** the mounting frame (20) has a receiving groove (22) which engages around the mirror edges and is open at least along one limb.

4. Sun visor according to one of Claims 1 to 3, **characterized in that** the sun visor body (1) is designed with beads (17) which extend from the outside of one of its wide sides or from the base (16) of an indentation (15) in this wide side until in contact with the inner surface of the opposite wide side, and **in that** the beads (17) are provided both for stabilizing the sun visor body (1) and for accommodating plug-in pins (33) of at least one connecting element, such as a ticket clip (32).

5. Sun visor according to at least one of Claims 1 to 4, **characterized in that** the sun visor body (1) consists of polypropylene material.

6. Sun visor according to at least one of Claims 1 to 5, **characterized in that** the sun visor body (1) has a surface graining effect (18), such as a leather graining effect.

7. Sun visor according to at least one of Claims 1 to 6, **characterized in that** a hinged cover (21) which covers the mirror (19) when it is not in use is coupled to the mounting frame (20).

8. Sun visor according to at least one of Claims 1 to 7, **characterized in that** the hinged cover (21) is interrupted on one longitudinal edge by recesses (28) which are open the edge and are traversed by a respective bearing pin (27), **in that** the bearing pins (27) interact with hinged hooks (26) provided on the mounting frame (20), and **in that** the hinged cover (21) is equipped with segment bodies (29) which slide on the mirror (19) and hold the hinged cover (21) in the open and in the closed position.

9. Sun visor according to at least one of Claims 1 to 8, **characterized in that** the sun visor body (1), the mounting frame (20), the hinged cover (21) and, if appropriate, the ticket clip (32) are coordinated in terms of colour with the interior fittings of the vehicle.

10. Sun visor according to at least one of Claims 1 to 9, **characterized in that** the mounting frame (20), the hinged cover (21) and the ticket clip (32) are designed in each case as an injection-moulded plastic part.

## Revendications

1. Pare-soleil pour véhicule, comprenant un corps de pare-soleil (1) creux, formé par soufflage, qui présente une première paroi (6) formant un côté large essentiellement plan du corps de pare-soleil (1) et une deuxième paroi (8) formant un côté large du corps de pare-soleil (1) avec un renfoncement en forme de cuvette (7), le renfoncement (7) recevant un miroir (19), **caractérisé en ce que** le miroir (19) est maintenu par un cadre de bordure (20) et le renfoncement (7) présente un fond (10) formé par des nervures (23, 24) et des parois (11) entourant la périphérie du cadre de bordure (20), lesquelles, lors du formage par soufflage du corps de pare-soleil (1), sont formées tout autour d'un bourrelet extérieur (31) du cadre de bordure (20) en formant une cannelure (12) recevant par engagement positif le bourrelet extérieur (31), des nervures (25) tournées à l'opposé du miroir étant disposées sur le fond du cadre de bordure (20), autour desquelles, lors du formage par soufflage du corps de pare-soleil (1), le matériau formant le fond (10) du renfoncement (7) est formé et qui s'appuient, par interposition dudit matériau, sur la face interne du côté large (6) essentiellement plan du corps de pare-soleil (1).

2. Pare-soleil selon la revendication 1, **caractérisé en ce que** le cadre de bordure (20) présente des nervures (23, 24) traversant l'ouverture du cadre, orientées horizontalement, pour le support arrière du miroir (19) et les nervures (25) orientées verticalement, tournées à l'opposé du miroir (19), sont disposées sur les nervures (24) orientées horizontalement.

3. Pare-soleil selon la revendication 1 ou 2, **caractérisé en ce que** le cadre de bordure (20) présente une rainure de réception (22) venant en prise tout autour des bords du miroir, ouverte au moins le long d'une branche.

4. Pare-soleil selon l'une quelconque des revendications 1 à 3, **caractérisé en ce que** le corps de pare-soleil (1) est réalisé avec des moulures (17) qui s'étendent depuis le côté extérieur de l'un de ses côtés larges ou depuis le fond (16) d'un renflement (15) dans ce côté large, jusqu'à venir en appui contre la face interne du côté large opposé et **en ce que** les moulures (17) sont prévues à la fois pour stabiliser le corps de pare-soleil (1) et pour recevoir des tourillons d'enfichage (33) d'au moins un élément de raccordement, comme par exemple une pince pour tickets (32).

5. Pare-soleil selon au moins l'une quelconque des revendications 1 à 4, **caractérisé en ce que** le corps de pare-soleil (1) se compose d'un matériau en polypropylène.

6. Pare-soleil selon au moins l'une quelconque des revendications 1 à 5, **caractérisé en ce que** le corps de pare-soleil (1) présente un grain de surface (18), comme par exemple un grain imitant le cuir.

7. Pare-soleil selon au moins l'une quelconque des revendications 1 à 6, **caractérisé en ce qu'**un couvercle rabattable (21) recouvrant le miroir (19) lorsqu'il n'est pas utilisé est articulé au cadre de bordure (20).

8. Pare-soleil selon au moins l'une quelconque des revendications 1 à 7, **caractérisé en ce que** le couvercle rabattable (21) est interrompu au niveau d'un bord longitudinal par des évidements (28) ouverts aux bords, traversés à chaque fois par une tige de support (27), **en ce que** les tiges de support (27) coopèrent avec des crochets de charnière (26) prévus sur le cadre de bordure (20) et **en ce que** le couvercle rabattable (21) est muni de corps de segments (29) glissant sur le miroir (19), qui maintiennent le couvercle rabattable (21) dans la position ouverte et dans la position fermée.

9. Pare-soleil selon au moins l'une quelconque des revendications 1 à 8, **caractérisé en ce que** le corps de pare-soleil (1), le cadre de bordure (20), le couvercle rabattable (21) et éventuellement la pince pour tickets (32) ont une couleur s'harmonisant à l'habillage interne du véhicule.

10. Pare-soleil selon au moins l'une quelconque des revendications 1 à 9, **caractérisé en ce que** le cadre de bordure (20), le couvercle rabattable (21) ainsi que la pince pour tickets (32) sont réalisés respectivement en une pièce moulée par injection de plastique.
